Europäisches Patentamt

European Patent Office

Office européen des brevets

(19)

(11) **EP 1 527 015 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(21) Anmeldenummer: **03771088.6**

(22) Anmeldetag: **24.07.2003**

(51) Int Cl.$^7$: **C01C 3/00**

(86) Internationale Anmeldenummer:
**PCT/EP2003/008128**

(87) Internationale Veröffentlichungsnummer:
**WO 2004/011373 (05.02.2004 Gazette 2004/06)**

(54) **VERFAHREN ZUR HERSTELLUNG VON CYANWASSERSTOFF DURCH OXIDATION STICKSTOFFHALTIGER KOHLENWASSERSTOFFE IN EINER FLAMME**

METHOD FOR THE PRODUCTION OF HYDROCYANIC ACID BY OXIDATION OF NITROGEN-CONTAINING HYDROCARBONS IN A FLAME

PROCEDE POUR PRODUIRE DU CYANURE D'HYDROGENE PAR OXYDATION D'HYDROCARBURES AZOTES DANS UNE FLAMME

(84) Benannte Vertragsstaaten:
**AT BE BG CH CY CZ DE DK EE ES FI FR GB GR HU IE IT LI LU MC NL PT RO SE SI SK TR**

(30) Priorität: **25.07.2002 DE 10233931**

(43) Veröffentlichungstag der Anmeldung:
**04.05.2005 Patentblatt 2005/18**

(73) Patentinhaber: **BASF Aktiengesellschaft 67056 Ludwigshafen (DE)**

(72) Erfinder:
• **EHRHARDT, Kai, Rainer**
**67063 Ludwigshafen (DE)**
• **MÜLLER-EVERSBUSCH, Mayke**
**68163 Mannheim (DE)**
• **STAPF, Dieter**
**B-2930 Brasschaat (BE)**

(74) Vertreter: **Isenbruck, Günter**
**Isenbruck, Bösl, Hörschler, Wichmann, Huhn Patentanwälte**
**Theodor-Heuss-Anlage 12**
**68165 Mannheim (DE)**

(56) Entgegenhaltungen:
**EP-A- 0 941 965**      **EP-A- 1 099 747**
**DE-A- 19 805 481**      **US-A- 5 204 079**

• **DATABASE CA [Online] CHEMICAL ABSTRACTS SERVICE, COLUMBUS, OHIO, US; 12. Mai 1984 (1984-05-12) MONTECATINI EDISON S.P.A.: "Hydrocyanic acid from methane and acetonitrile mixtures" retrieved from STN Database accession no. 74:143911 CA XP002267265 & IT 845 992 1 (MONTECATINI EDISON S.P.A.) 2. Juli 1969 (1969-07-02)**
• **MORIKAWA T: "EVOLUTION OF HYDROGEN CYANIDE DURING COMBUSTION AND PYROLYSIS" JOURNAL OF COMBUSTION TOXICOLOGY, WESTPORT, CT, US, Bd. 5, Nr. 3, 1. August 1978 (1978-08-01), Seiten 315-330, XP002069700 ISSN: 0362-1669**

**Beschreibung**

Die Erfindung betrifft ein Verfahren zur Herstellung von Cyanwasserstoff durch autotherme, nicht-katalytische Oxidation stickstoffhaltiger Kohlenwasserstoffe in einer Flamme.

Bei der Herstellung von stickstoffhaltigen Grundchemikalien wie Acrylnitril, Adipodinitril oder Isocyanaten fallen zum Teil stickstoffhaltige Nebenprodukte an, die nicht weiter stofflich verwertet werden können, da beispielsweise ihre Isolierung zu aufwendig wäre oder es keine wirtschaftlich sinnvolle, direkte stoffliche Verwertungsmöglichkeit gibt. Häufig fallen solche Nebenprodukte in Form komplexer Stoffgemische als Destillationsrückstände an. Solche Rückstände werden bisher beispielsweise entsorgt, indem sie verbrannt werden, oder indem sie in Vergasungsprozessen vollständig in brennbares Gas umgewandelt werden, das anschließend thermisch verwertet wird, beispielsweise in Gasmotoren oder Gasturbinen zur Erzeugung elektrischer Energie und von Heizwärme.

M. Schingnitz und J. Görz beschreiben in Umwelt, Band 29 (1999), Nr. 9 die Vergasung von Brennstoffen, Reststoffen und Abfallstoffen durch Flugstromvergasung.

Es ist bekannt, durch Verbrennung von Gemischen niederer aliphatischer Kohlenwasserstoffe, Ammoniak und Sauerstoff in einer Flamme Cyanwasserstoff zu erzeugen. Ferner ist bekannt, Acetonitril als leichten stickstoffhaltigen Kohlenwasserstoff katalytisch zu oxidieren, wobei Cyanwasserstoff erhalten wird.

Aus US 2,596,421 ist die Flammsynthese von Cyanwasserstoff aus Ammoniak, Sauerstoff und leichten Kohlenwasserstoffen mit maximal 6 C-Atomen bekannt. Für die Durchführung der Flammsynthese werden drei verschiedene laminare Brenner vorgeschlagen.

In DE-B 1 159 409 wird die Herstellung von Cyanwasserstoff durch nicht-katalytische, autotherme Verbrennung von gesättigten oder ungesättigten Kohlenwasserstoffen mit 1 bis 6 C-Atomen, Ammoniak und Sauerstoff und Abkühlung der umgesetzten Gase unmittelbar nach Austritt aus der Verbrennungszone beschrieben. Die Verbrennung erfolgt in einer turbulenten Flamme.

US 4,981,670 beschreibt die Herstellung von Cyanwasserstoff durch katalytische Oxidation von Acetonitril an einem Oxidations-/Ammoxidationskatalysator in einem Fließbettreaktor.

Aufgabe der Erfindung ist es, ein Verfahren zur stofflichen Verwertung von Rückständen, die organisch gebundenen Stickstoff enthalten, bereitzustellen.

Gelöst wird die Aufgabe durch ein Verfahren zur Herstellung von Cyanwasserstoff durch autotherme, nicht-katalytische Oxidation von einem oder mehreren stickstoffhaltigen Kohlenwasserstoffen oder einem stickstoffhaltigen Kohlenwasserstoffgemisch, bei dem die stickstoffhaltigen Kohlenwasserstoffe, ein sauerstoffhaltiges Gas, gegebenenfalls Ammoniak, gegebenenfalls Wasser, gegebenenfalls ein Stickoxide enthaltendes Gas und gegebenenfalls weitere, sich im wesentlichen inert verhaltende Einsatzgasbestandteile in eine Flammreaktionszone eingebracht werden, in der Flammreaktionszone und einer Nachreaktionszone bei einer Temperatur von 1000 bis 1800 °C während einer Reaktionszeit von 0,03 bis 0,3 s zu einem Spaltgas, enthaltend mindestens die Bestandteile Cyanwasserstoff, Kohlenstoffoxide, Wasserstoff, Wasser, Ammoniak, Stickstoff, leichte Kohlenwasserstoffe und gegebenenfalls weitere Spaltgasbestandteile reagieren, wobei das atomare C/N-Verhältnis in den Reaktionszonen von 1 bis 7 beträgt und die atomare Luftzahl $\lambda_{ato} < 0,6$ ist, das Spaltgas abgekühlt und aufgetrennt wird.

Die Flammreaktionszone ist die Reaktionszone, in der typischerweise ca. 95 % Brennstoff oder Oxidator umgesetzt werden. Die Flammreaktionszone ist durch Lichtemissionen im sichtbaren Bereich gekennzeichnet und ist ohne weiteres optisch detektierbar. Es schließt sich erfindungsgemäß eine Nachreaktionszone an.

Die autotherme, nicht-katalytische Oxidation der stickstoffhaltigen Kohlenwasserstoffe kann in Gegenwart oder in Abwesenheit von zusätzlich in die Flamme eingebrachtem Ammoniak durchgeführt werden. Durch den Zusatz von Ammoniak kann ein bestimmtes C/N-Verhältnis in dem Reaktionsgemisch eingestellt werden.

Um eine befriedigende HCN-Ausbeute zu erreichen, sollte das atomare C/N-Verhältnis in der Flamme von 1 bis 7 betragen. Ist das atomare C/N-Verhältnis in dem oder den eingesetzten stickstoffhaltigen Kohlenwasserstoffen > 7, so ist im allgemeinen der Zusatz von Ammoniak erforderlich, um das C/N-Verhältnis auf einen Wert kleiner oder gleich 7 abzusenken. Liegt das atomare C/N-Verhältnis der eingesetzten stickstoffhaltigen Kohlenwasserstoffe im Bereich von 5 bis 7, so wird vorzugsweise Ammoniak zugesetzt, um das C/N-Verhältnis weiter abzusenken. Liegt das atomare C/N-Verhältnis der eingesetzten stickstoffhaltigen Kohlenwasserstoffe im Bereich von 1 bis 5, können auch ohne Zusatz von Ammoniak gute HCN-Ausbeuten erzielt werden. Besonders bevorzugt liegt das atomare C/N-Verhältnis im Bereich von 2 bis 4, da dann eine hohe Cyanwasserstoff-Ausbeute bezüglich des in dem Brennstoffgemisch gebundenen Stickstoff und Kohlenstoff und eine hohe Cyanwasserstoff-Konzentration in dem Spaltgas erzielt wird.

Das atomare C/N-Verhältnis ist das Verhältnis des in den Einsatzkohlenwasserstoffen gebundenen Gesamtkohlenstoffs zu dem in den Einsatzkohlenwasserstoffen und gegebenenfalls in dem zugesetzten Ammoniak und in zugesetzten Stickoxiden (NO, $NO_2$; $N_2O$ wird nicht berücksichtigt) gebundenen Gesamtstickstoff ohne Berücksichtigung des mit dem sauerstoffhaltigen Gas, beispielsweise Luft, eingebrachten molekularen Stickstoffs. In den Gesamtkohlenstoff zur Berechnung des C/N-Verhältnisses geht solcher Kohlenstoff jedoch nicht ein, der direkt an Sauerstoff gebunden ist, wie in Methanol oder Formaldehyd. Entsprechend wird im Falle von Ethanol nur der Methyl-Kohlenstoff berücksichtigt.

Geeignete stickstoffhaltige Einsatzkohlenwasserstoffe können bestimmte wohldefinierte Verbindungen wie Acetonitril, Propionitril, Adiponitril oder Methylglutaronitril sein. Geeignete stickstoffhaltige Einsatzkohlenwasserstoffe können aber auch komplexe stickstoffhaltige Kohlenwasserstoffgemische sein. Derartige Kohlenwasserstoffgemische fallen beispielsweise bei der Herstellung definierter stickstoffhaltiger Verbindungen als Rückstände, beispielsweise als Destillationsrückstände an. Beispiele sind bei der Herstellung von Adipodintril, Acrylnitril, Anilin oder Isocyanaten anfallende stickstoffhaltige Rückstände. Beispiele sind ferner Raffinerierückstände. Das erfindungsgemäße Verfahren ist insbesondere geeignet, derartige Rückstände einer wirtschaftlichen stofflichen Verwertung zuzuführen.

Grundsätzlich ist das erfindungsgemäße Verfahren auch geeignet, stickstofffreie Kohlenwasserstoffe oder Kohlenwasserstoffgemische, die als Rückstände anfallen, stofflich zu verwerten. Solche Kohlenwasserstoffe sind vorzugsweise sauerstoffarme Kohlenwasserstoffe, beispielsweise verunreinigte Lösungsmittel wie THF oder Hexan.

Das in die Flamme eingebrachte, die Verbrennung unterhaltende sauerstoffhaltige Gas kann beispielsweise reiner Sauerstoff, mit Sauerstoff angereicherte Luft oder Luft sein. Bevorzugt wird als sauerstoffhaltiges Gas technischer Sauerstoff eingesetzt. Durch die Verwendung von nahezu reinem Sauerstoff wird eine möglichst hohe Cyanwasserstoffkonzentration im Spaltgas erzielt, da keine großen Mengen an Inertgasen wie molekularer Stickstoff in das Gasgemisch eingebracht werden. Dies erleichtert die Aufarbeitung des Spaltgases und verbessert die thermische Verwertbarkeit des nach der Cyanwasserstoffabtrennung verbleibenden Restspaltgases.

Für die Cyanwasserstoff-Ausbeute des erfindungsgemäßen Verfahrens ist wesentlich, dass die atomare Luftzahl $\lambda_{ato} < 0{,}6$ beträgt. Wesentlich für die Cyanwasserstoff-Ausbeute ist ferner, dass die Temperatur in der Flamme im Bereich von 1000 bis 1800 °C liegt. Es wurde gefunden, dass chemisch gebundener Stickstoff in fetten, das heißt sauerstoffarmen Verbrennungsgemischen und bei hohen Temperaturen hauptsächlich zu Cyanwasserstoff reagiert. Eine Temperatur in dem angegebenen Bereich und eine atomare Luftzahl $\lambda_{ato} < 0{,}6$ führen ferner dazu, dass in dem die Flammreaktionszone verlassenden Produktgasgemisch leichte Kohlenwasserstoff wie Methan, Ethylen und Acetylen vorliegen. Die Gegenwart dieser Kohlenwasserstoffe in der Nachreaktionszone wirkt dem Cyanwasserstoff-Abbau in der Nachreaktionszone entgegen.

Die atomare Luftzahl ist wie folgt definiert:

$$\lambda_{ato} = [O] / ([H]/2 + 2 \times [C])$$

Darin bedeuten [O], [H] und [C] den in dem Verbrennungsgemisch insgesamt enthaltenen, gebundenen oder freien Sauerstoff, Wasserstoff bzw. Kohlenstoff.

Die Temperatur in der Flamme kann über die Sauerstoffzufuhr geregelt werden. Eine Erhöhung der Zufuhr an molekularem Sauerstoff bewirkt auch eine Erhöhung der Flammtemperatur. Die Flammtemperatur kann ferner durch Zugabe von Wasser geregelt werden. Wasserzugabe bewirkt einerseits eine Abkühlung, erhöht andererseits aber auch das Sauerstoffangebot in der Flamme und damit die atomare Luftzahl. Dadurch wird unerwünschter Rußbildung entgegengewirkt.

In einer Ausführungsform des erfindungsgemäßen Verfahrens wird Wasser in die Flamme eingebracht. Wasser kann dampfförmig oder in flüssiger Form, beispielsweise als Kohlenwasserstoff/Wasser-Emulsion, in die Flamme eingebracht werden. Eine besonders gute Abkühlung wird - wegen der hohen Verdampfungsenthalpie von Wasser - erzielt, wenn Wasser in flüssiger Form in die Flamme eingebracht wird.

Die Temperatur in der Flamme kann auch durch Zugabe von sich in der Flamme weitgehend inert verhaltenden Gasen geregelt werden, die als thermischer Ballast wirken und somit eine Abkühlung bewirken.

In einer weiteren Ausführungsform des erfindungsgemäßen Verfahrens werden sich im wesentlichen inert verhaltende weitere Einsatzgasbestandteile in die Flamme eingebracht. Derartige Einsatzgasbestandteile sind beispielsweise Kohlenstoffoxide (CO und $CO_2$), molekularer Wasserstoff oder Stickstoff. Im wesentlichen sich inert verhaltende Einsatzgasbestandteile sind solche, die sich bezüglich der Cyanwasserstoff-Bildung im wesentlichen inert verhalten, also an den zur Cyanwasserstoff-Bildung führenden Reaktionen nicht beteiligt sind.

Die Temperatur in der Flamme beträgt vorzugsweise von 1200 bis 1400 °C.

Zusätzlich zu den genannten Gasen können Stickoxide, d. h. Stickstoffmonoxid oder Stickstoffdioxid enthaltende Gase in die Flamme eingebracht werden. Stickoxide werden in dem erfindungsgemäßen Verfahren mit hoher Ausbeute ebenfalls in Cyanwasserstoff überführt. So erlaubt das erfindungsgemäße Verfahren auch die stoffliche Verwertung von Stickstoffoxide enthaltenden Abgasen, beispielsweise aus der Salpetersäureherstellung.

Wesentlich für die Cyanwasserstoff-Ausbeute des erfindungsgemäßen Verfahrens ist ferner, dass die Verweilzeit des Reaktionsgasgemischs bei der Verbrennungstemperatur von 1000 bis 1800 °C im Bereich von 0,03 bis 0,3 s liegt. Es wurde gefunden, dass eine längere Verweilzeit und/oder höhere Temperaturen zu einem signifikanten Abbau von bereits gebildetem Cyanwasserstoff führt. Bei einer kürzeren Verweilzeit und/oder niedrigeren Temperaturen ist der erzielte Umsatz hingegen unzureichend. Beides wirkt sich ausbeutemindernd aus. Eine bestimmte Verweilzeit in dem genannten Temperaturbereich kann durch rasche Abkühlung des bei der Verbrennung gebildeten Spaltgases eingestellt werden.

Der oder die stickstoffhaltigen Einsatzkohlenwasserstoffe können in flüssiger Form oder gasförmig in die Flamme eingebracht werden.

Die Einsatzkohlenwasserstoffe können in flüssiger Form in die Flamme eingebracht werden. Die Einbringung der Kohlenwasserstoffe in flüssiger Form erfolgt vorzugsweise durch Zerstäuben der Kohlenwasserstoffe zu feinen Flüssigkeitstropfen, vorzugsweise mit einem mittleren Tropfendurchmesser von < 100 μm, besonders bevorzugt < 50 μm, insbesondere < 20 μm. Unter mittlerem Tropfendurchmeser wird vorliegend der dem Fachmann bekannte Sauterdurchmesser $d_{32}$ verstanden, der die volumenspezifische Oberfläche charakterisiert. Durch eine möglichst kleine Tropfengröße wird sichergestellt, dass die Zeit, die die Flüssigkeitstropfen bis zur vollständigen Verdampfung benötigen, klein gegenüber der Reaktionszeit ist, so dass die Verdampfung quasi instantan stattfindet. Typischer Weise benötigt ein 200 μm großer Kohlenwasserstofftropfen ca. 50 ms bis zur vollständigen Verdampfung, was bereits in der Größenordnung der Reaktionszeit liegt. Die ersten verdampften Kohlenwasserstoffmoleküle finden also auch bei im zeitlichen Mittel fetten Verbrennungsbedingungen ein großes Sauerstoffangebot, also magere Verbrennungsbedingungen vor. Magere Verbrennungsbedingungen mindern jedoch die Cyanwasserstoff-Ausbeute. Große Kohlenwasserstofftropfen können sogar die Flamme durchstoßen.

Die Zerstäubung der Einsatzkohlenwasserstoffe kann mittels einer Einstoffdüse oder unter Einsatz eines Zerstäuberhilfsmediums mittels einer Zweistoffdüse erfolgen. Feinste Zerstäubung wird häufig unter Einsatz eines Zerstäuberhilfsmediums erzielt. Als Zerstäuberhilfsmedium können das eingesetzte sauerstoffhaltige Gas und/oder weitere in die Flamme einzubringende Gasbestandteile des Reaktionsgasgemischs wie Ammoniak oder Wasserdampf fungieren.

Es ist auch möglich, sofern die zusätzliche Einspeisung von Wasser - beispielsweise zur Regelung der Flammtemperatur und/oder zur Erhöhung des Sauerstoffangebots - vorgesehen ist, den stickstoffhaltigen Kohlenwasserstoff als wässrige Emulsion in die Flamme einzubringen. Durch die Gegenwart von Wasser findet eine Nachzerstäubung der Flüssigkeitstropfen in der Flamme statt. Diese wird durch spontane Verdampfung der emulgierten Wassertröpfchen bewirkt. Dadurch wird feinste Zerstäubung ermöglicht.

Der oder die stickstoffhaltigen Einsatzkohlenwasserstoffe können gasförmig in die Flamme eingebracht werden. Die stickstoffhaltigen Kohlenwasserstoffe können vorverdampft werden, anschließend mit weiteren Einsatzgasbestandteilen vorgemischt werden und als Gasgemisch in die Flamme eingebracht werden. Weitere Einsatzgasbestandteile, mit denen die vorverdampften Kohlenwasserstoffe vorgemischt werden, sind insbesondere das sauerstoffhaltige Gas und gegebenenfalls Ammoniak, aber auch Wasserdampf und weitere, sich inert verhaltende Gasbestandteile wie molekularer Wasserstoff und Kohlenstoffoxide. Der oder die Einsatzkohlenwasserstoffe können auch nur teilweise vorverdampft werden und/oder mit nur einem Teil der weiteren Einsatzgasbestandteile vorgemischt werden.

Bevorzugt ist eine Brennerkonstruktion, mit der eine möglichst rückvermischungsfreie Strömung realisiert wird, da durch Rückvermischung die Cyanwasserstoff-Ausbeute vermindert wird. In der Regel herrscht in der Flammreaktionszone und der Nachreaktionszone eine turbulente Strömung vor.

Es wird ein Spaltgas erhalten, das mindestens die Bestandteile Cyanwasserstoff, Kohlenstoffoxide, Wasserstoff, Wasser, Ammoniak, Stickstoff und leichte Kohlenwasserstoffe enthält. Darüber hinaus kann das Spaltgas weitere Bestandteile wie Stickstoffmonoxid oder Isocyansäure enthalten.

Eine typische Spaltgaszusammensetzung enthält als Hauptbestandteile Cyanwasserstoff, Ammoniak, Stickstoff, Wasserdampf, Kohlenmonoxid, Kohlendioxid und Wasserstoff und als Nebenbestandteile Methan, Ethylen und Acetylen sowie in Spuren Stickstoffmonoxid und Isocyansäure.

Die Auftrennung eines Spaltgases, das mindestens die Bestandteile Cyanwasserstoff, Kohlenstoffoxide, Wasserstoff, Wasser und Ammoniak enthält, umfasst vorzugsweise die Schritte

(i) Abkühlung des Spaltgases auf eine Temperatur < 300 °C;
(ii) Abtrennng von Ammoniak als Ammoniumsulfat oder Ammoniumphosphat durch Gaswäsche, wobei ein an Ammoniak abgereichertes Spaltgas erhalten wird;
(iii) Abtrennung von Cyanwasserstoff als wässrige Cyanwasserstoff-Lösung, wobei ein an Cyanwasserstoff abgereichertes Restspaltgas erhalten wird;
(iv) Gewinnung von Cyanwasserstoff aus der wässrigen Cyanwasserstoff-Lösung durch Destillation;
(v) gegebenenfalls teilweise Rückführung des Restspaltgases in die Flammreaktionszone.

Die Abkühlung des Spaltgases kann in mehreren Stufen erfolgen. Beispielsweise kann in einer ersten Stufe durch Einsprühen von Wasser in das heiße Spaltgas eine sehr schnelle Abkühlung auf ca. 800 °C erfolgen. In einer zweiten Stufe kann das heiße Spaltgas in einem Dampferzeuger auf ca. 300 °C abgekühlt werden. In einer dritten Stufe kann das Spaltgas durch Einsprühen von Öl auf ca. 200 °C abgekühlt werden. Dabei werden während der Verbrennung gebildeter Ruß und Rußvorläufer (polycyclische Kohlenwasserstoffe) in dem Öl suspendiert bzw. gelöst und so aus dem Spaltgas herausgewaschen.

Die Abtrennng von Ammoniak kann durch Gaswäsche mit Schwefelsäure, Phosphorsäure oder Monoammoniumphosphatlösung erfolgen, wobei Ammoniak als Ammoniumsulfat oder Ammoniumphosphat abgetrennt wird. Dabei wird ein an Ammoniak abgereichertes Spaltgas erhalten, vorzugsweise wird ein ammoniakfreies Spaltgas erhalten. Wird Ammoniak als Ammoniumphosphat abgetrennt, so kann Ammoniak aus der wässrigen Lösung mit Dampf freigestrippt und in die Flamme recycliert werden. Die zurückgewonnene Ammoniummonophosphatlösung kann in die Gaswäsche zurückgeführt werden.

Die Abtrennung von Cyanwasserstoff kann durch Kondensation von Cyanwasserstoff und Wasserdampf aus dem Spaltgas oder durch Absorption in kaltem Wasser erfolgen, wobei eine wässrige Cyanwasserstofflösung erhalten wird. Aus der wässrigen Cyanwasserstofflösung kann durch Destillation im wesentlichen wasserfreier Cyanwasserstoff gewonnen werden.

Es verbleibt ein an Cyanwasserstoff abgereichertes, vorzugsweise ein im wesentlichen cyanwasserstofffreies Restspaltgas, das beispielsweise noch Kohlenstoffoxide und molekularen Wasserstoff sowie in geringen Mengen Nebenbestandteile wie Methan, Ethylen und Acetylen enthält. Das Restspaltgas kann als thermischer Ballast zumindest teilweise in die Flamme zurückgeführt werden. Das Restspaltgas kann ferner thermisch verwertet werden.

Die Erfindung wird nachfolgend unter Bezugnahme auf die Zeichnungen näher erläutert.

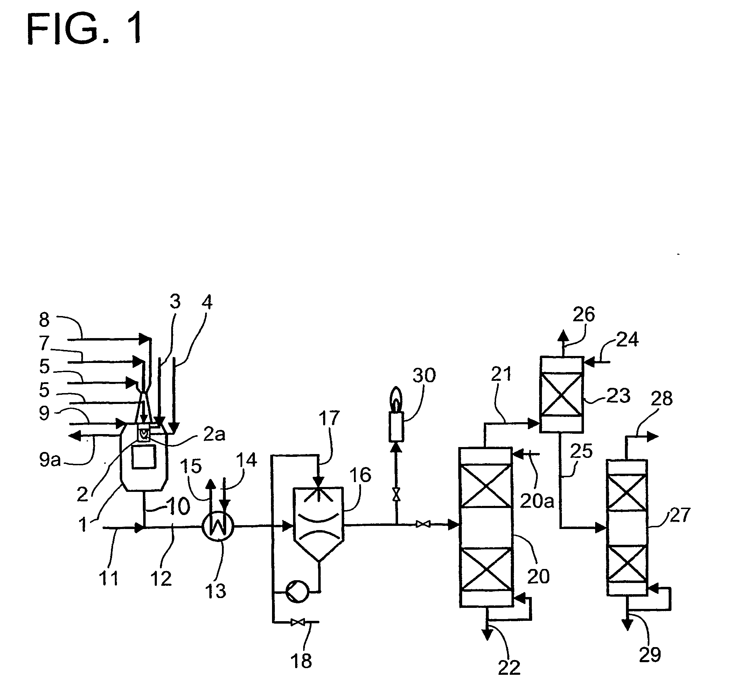

Figur 1 zeigt ein Verfahrensschema einer bevorzugten Ausführungsform des erfindungsgemäßen Verfahrens. Der im ganzen mit 1 bezeichnete Reaktor umfasst einen Brenner 2 mit einer Brennerflamme 2a und Zuleitungen 3 bis 8. Über die Zuleitungen 3 und 4 werden Erdgas und Luft zum Betrieb eines Zündbrenners und zum Warmfahren des Reaktors eingebracht. Über Zuleitungen 5, 6, 7 und 8 werden stickstoffhaltiger Flüssigrückstand, Sauerstoff, Ammoniak bzw. Wasserdampf eingebracht. Über Zuleitung 9 und die Ableitung 9a wird der Reaktor mit Kühlwasser versorgt. Die erhaltenen heißen Spaltgase 10 werden durch Einsprühen von Wasser 11 in das heiße Spaltgas in einer Leitung 12 mit erweitertem Leitungsquerschnitt schnell auf ca. 800 °C abgekühlt. Das so vorgekrühlte Spaltgas wird einem Dampferzeuger 13 mit Wasserzuleitung 14 und Dampfableitung 15 zugeleitet und dort auf ca. 300 °C abgekühlt. In dem Venturi-Wäscher 16 wird das Spaltgas schließlich durch Einsprühen von Quench-Öl 17 auf ca. 200 °C abgekühlt, wobei rußhaltiges Öl 18 anfällt. Zur Abtrennung von Ammoniak wird das abgekühlte Spaltgas 19 einer Trennkolonne 20 mit Schwefelsäure, Phosphorsäure oder Monoammoniumphosphatlösung 20a gewaschen, wobei Ammoniak als Ammoniumsulfat oder Ammoniumphosphat abgetrennt wird. Am Kolonnenkopf wird ein ammoniakfreies Spaltgas 21, am Kolonnensumpf eine wässrige Lösung 22 von Ammoniumphosphat- oder Ammoniumsulfat erhalten. Zur Abtrennung von Cyanwasserstoff wird das ammoniakfreie Spaltgas 21 einer weiteren Trennkolonne 23 zugeleitet, in der Cyanwasserstoff aus dem Spaltgas in kaltem Wasser 24 absorbiert wird. Am Kolonnensumpf wird eine wässrige Cyanwasserstofflösung 25, am Kolonnenkopf ein im wesentlichen cyanwasserstofffreies Restspaltgas 26 erhalten, das beispielsweise als Synthesegas verwendet werden kann. Die wässrigen Cyanwasserstofflösung 25 wird einer weiteren Trennkolonne 27 zugeleitet und dort in im wesentlichen wasserfreien Cyanwasserstoff 28 als Kopfprodukt und Wasser 29 als Sumpfprodukt aufgetrennt. Für Notfälle sowie für die An- und Abfahr-Vorgänge ist ferner eine übliche Fackel 30 vorgesehen.

Es verbleibt ein an Cyanwasserstoff abgereichertes, vorzugsweise ein im wesentlichen cyanwasserstofffreies Restspaltgas 26, das beispielsweise noch Kohlenstoffoxide und molekularen Wasserstoff sowie in geringen Mengen Nebenbestandteile wie Methan, Ethylen und Acetylen enthält. Das Restspaltgas kann als thermischer Ballast zumindest teilweise in die Flamme zurückgeführt werden. Das Restspaltgas kann ferner thermisch verwertet werden.

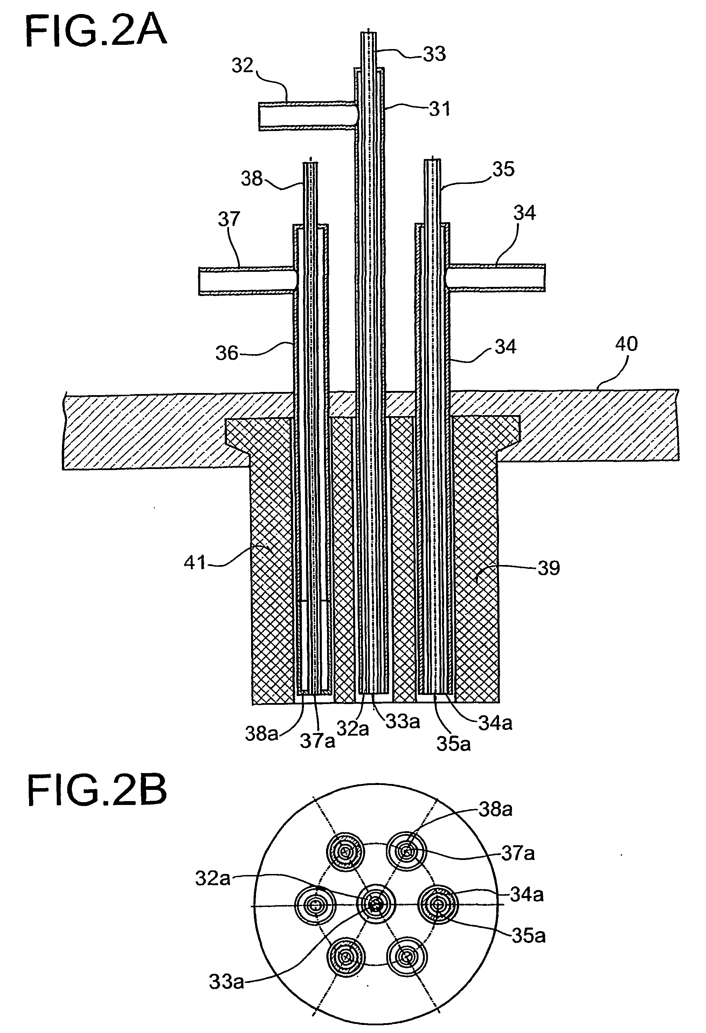

Figur 2a zeigt eine Schnitt durch einen in dem erfindungsgemäßen Verfahren zur Erzeugung einer Flammreak-tionszone eingesetzten Brenner. Der im Ganzen mit 39 bezeichnete Brenner, der in einem Brennkammerdeckel 40 verankert ist, umfasst, in einen Brennerstein 41 eingelassen, einen Zündbrenner 31 mit einer Luftzuleitung 32 und einer Erdgaszuleitung 33 mit entsprechenden Öffnungen 32a bzw. 33a, eine Mehrzahl von Gaszuleitungen 34 für Inertgase und in diesen konzentrisch angeordnete Gaszuleitungen 35 für Ammoniak mit entsprechenden Öffnungen 34a bzw. 35a, sowie eine Mehrzahl von Zweistoffdüsen 36 mit Zuleitungen 37 für Sauerstoff und in diesen konzentrisch angeordneten Zuleitungen 38 für stickstoffhaltige Flüssigrückstände mit entsprechenden Öffnungen 37a bzw. Ringspalt-Öffnungen 38a.

Figur 2b zeigt eine Aufsicht auf den Brenner mit den Öffnungen 32a bis 38a.

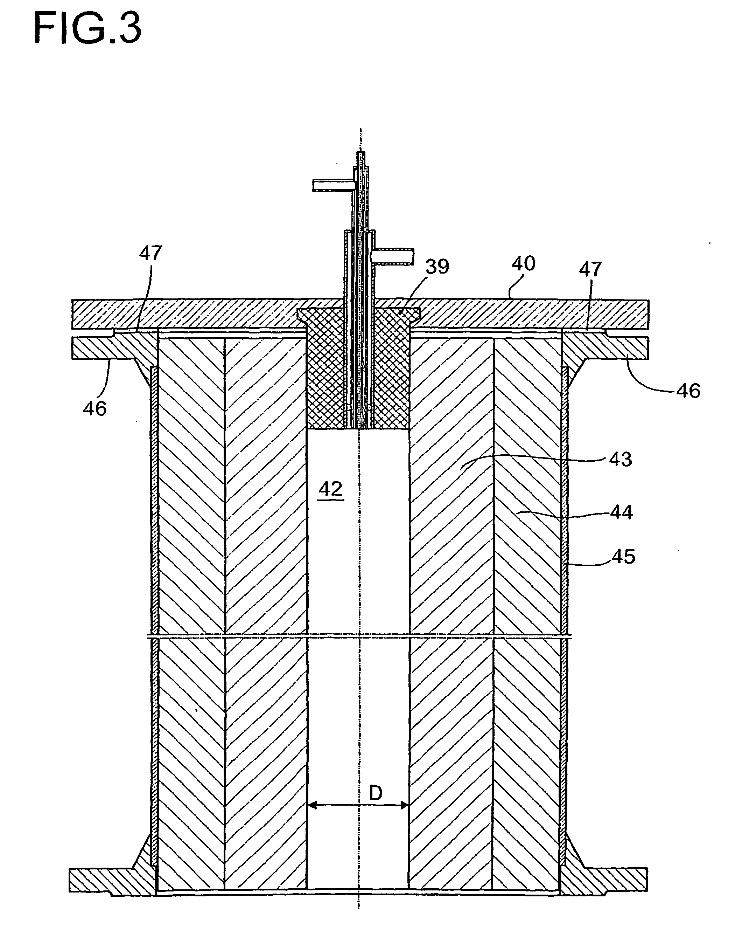

Figur 3 zeigt einen Schnitt durch einen in dem erfindungsgemäßen Verfahren eingesetzten Reaktor. An den in den Brennerdeckel 40 eingelassen (vereinfacht dargestellten) Brenner 39 schließt sich die zylinderförmige Brennkammer 42 mit dem Durchmesser D und der Länge L an, die durch die Hochtemperaturisolierung 43 (beispielsweise aus $Al_2O_3$ und $SiO_2$) begrenzt wird. Die Hochtemperaturisolierung 43 ist von der Hinterisolierung 44 und dem Stahlmantel 45 umgeben. Dieser ist über Flansche 46 und Dichtungen 47 mit dem Brennerdeckel 40 verbunden. Durch die Geometrie der Brennkammer wird eine rückvermischungsarme Kolbenströmung realisiert.

Beispiel

In einer Laboranlage wird die autotherme, nicht-katalytische partielle Oxidation von Acetonitril untersucht, das als einfache Modellsubstanz für hoch stickstoffhaltige Kohlenwasserstoffe dient. Die Laboranlage umfasst einen Brenner mit einem Außendurchmesser von 15 mm, der zur Einspeisung der vorgemischten Einsatzstoffe sechs axiale 4 mm-Bohrungen und zur Einspeisung von Sauerstoff eine zentrale 2 mm-Bohrung aufweist. Auf den Brenner ist ein 1,1 m langes Rohr aus Aluminiumoxid mit einem Innendurchmesser von 15 mm montiert, welches sich in einem elektrisch beheizten Ofen befindet. Die Ofentemperatur wird gleich der berechneten Reaktionstemperatur von 1300 °C gewählt, um Wärmeverluste zu minimieren. In zwei separate Dünnschichtverdampfer werden 1,93 kg / h Acetonitril und 0,19 kg / h Wasser dosiert und verdampft. Die Dämpfe werden mit 0,12 Nm$^3$ / h Sauerstoff homogen gemischt und mit 120 °C durch die sechs axialen Bohrungen zugeführt. Durch die zentrale Bohrung werden 0,12 Nm$^3$ / h Sauerstoff zugeführt, um die Flamme zu stabilisieren. Die Verweilzeit der Reaktionsgase bei der Reaktionstemperatur von 1300 °C beträgt rechnerisch 0,05 s. Danach wird das gebildete Spaltgas durch wassergekühlte Wände schnell auf etwa 150 °C abgekühlt und so die Gaszusammensetzung "eingefroren". Der Kühler weist einen 90° Bogen mit einem Innendurchmesser von 29,7 mm auf, an den sich ein 485 mm langes gerades Stück mit einem Innendurchmesser von 20 mm anschließt. Die gekühlte Länge zwischen dem Ende des Reaktors und der Probenahmestelle beträgt insgesamt 670 mm. Anschließend wird die Zusammensetzung des Spaltgasgemischs bestimmt. HCN und NH$_3$ werden mittels eines FT-IR-Spektrometers bestimmt, wobei zur Bestimmung von HCN das Spaltgas zuvor über P$_2$O$_5$ getrocknet wird, während NH$_3$ in dem wasserdampfhaltigen Gasgemisch bestimmt wird. CO, CO$_2$ und CH$_4$ werden mit ND-IR, CH$_4$, C$_2$H$_2$, C$_2$H$_4$ und C$_2$H$_6$ mit GC-FID und H$_2$ mittels eines Wärmeleitfähigkeitsdetektors bestimmt, wobei HCN, NH$_3$ und H$_2$O vorher mit NaOH bzw. P$_2$O$_5$ abgetrennt werden.
Es wurde die nachstehende Zusammensetzung ermittelt (in Vol.-%, bezogen auf das wasserfreie Gasgemisch):

| | |
|---|---|
| HCN | 29 |
| NH$_3$ | 1,8 |
| CO | 28 |
| CO$_2$ | 1,4 |
| H$_2$ | 26 |
| CH$_4$ | 1,8 |
| C$_2$H$_2$ | 2 |
| C$_2$H$_4$ | 0,1 |
| C$_2$H$_6$ | 0,001 |

Daraus ergibt sich eine HCN-Ausbeute von ca. 70 %, bezogen auf eingesetzten Stickstoff.

**Patentansprüche**

1. Verfahren zur Herstellung von Cyanwasserstoff durch autotherme, nicht-katalytische Oxidation von einem oder mehreren stickstoffhaltigen Kohlenwasserstoffen oder einem stickstoffhaltigen Kohlenwasserstoffgemisch, bei dem die stickstoffhaltigen Kohlenwasserstoffe, ein sauerstoffhaltiges Gas, gegebenenfalls Ammoniak, gegebenenfalls Wasser, gegebenenfalls ein Stickoxide enthaltendes Gas und gegebenenfalls weitere, sich im wesentlichen inert verhaltende Einsatzgasbestandteile in eine Flammreaktionszone eingebracht werden, in der Flammreaktionszone und einer Nachreaktionszone bei einer Temperatur von 1000 bis 1800 °C während einer Reaktionszeit von 0,03 bis 0,3 s zu einem Spaltgas enthaltend mindestens die Bestandteile Cyanwasserstoff, Kohlenstoffoxide, Wasserstoff, Wasser, Ammoniak, Stickstoff, leichte Kohlenwasserstoffe und gegebenenfalls weitere Spaltgasbestandteile reagieren, wobei das atomare C/N-Verhältnis in den Reaktionszonen von 1 bis 7 beträgt und die atomare Luftzahl $\lambda_{ato} < 0,6$ ist, das Spaltgas abgekühlt und aufgetrennt wird.

2. Verfahren nach Anspruch 1, **dadurch gekennzeichnet, dass** Ammoniak in die Flammreaktionszone eingebracht wird.

3. Verfahren nach Anspruch 1 oder 2, **dadurch gekennzeichnet, dass** die eingesetzten stickstoffhaltigen Kohlenwasserstoffe ein C/N-Verhältnis von 1 bis 5 aufweisen.

4. Verfahren nach Anspruch 1 oder 2, **dadurch gekennzeichnet, dass** die eingesetzten stickstoffhaltigen Kohlenwasserstoffe ein C/N-Verhältnis von 5 bis 7 aufweisen.

5. Verfahren nach einem der Ansprüche 1 bis 4, **dadurch gekennzeichnet, dass** die eingesetzten stickstoffhaltigen Kohlenwasserstoffe Rückstände sind.

6. Verfahren nach einem der Ansprüche 1 bis 5, **dadurch gekennzeichnet, dass** Wasser in die Flammreaktionszone eingebracht wird.

7. Verfahren nach einem der Ansprüche 1 bis 6, **dadurch gekennzeichnet, dass** sich im wesentlichen inert verhaltende weitere Einsatzgasbestandteile in die Flamme eingebracht werden.

8. Verfahren nach Anspruch 7, **dadurch gekennzeichnet, dass** die sich im wesentlichen inert verhaltenden weiteren Einsatzgasbestandteile aus dem Spaltgas gewonnene Kohlenstoffoxide und/ oder Wasserstoff umfassen.

9.  Verfahren nach einem der Ansprüche 1 bis 8, **dadurch gekennzeichnet, dass** ein Stickoxide enthaltendes Gas in die Flammreaktionszone eingebracht wird.

10. Verfahren nach einem der Ansprüche 1 bis 9, **dadurch gekennzeichnet, dass** die eingesetzten stickstoffhaltigen Kohlenwasserstoffe oder Kohlenwasserstoffgemische in flüssiger Form in die Flammreaktionszone eingebracht werden.

11. Verfahren nach Anspruch 10, **dadurch gekennzeichnet, dass** die eingesetzten stickstoffhaltigen Kohlenwasserstoffe zu Flüssigkeitstropfen mit einem mittleren Teilchendurchmesser von < 100 μm zerstäubt werden.

12. Verfahren nach Anspruch 10 oder 11, **dadurch gekennzeichnet, dass** die eingesetzten stickstoffhaltigen Kohlenwasserstoffe oder Kohlenwasserstoffgemische als wässrige Emulsion in die Flammreaktionszone eingebracht werden.

13. Verfahren nach Anspruch 12, **dadurch gekennzeichnet, dass** die eingesetzte wässrige Emulsion zu Flüssigkeitstropfen mit einem Teilchendurchmesser von < 100 μm zerstäubt wird.

14. Verfahren nach einem der Ansprüche 1 bis 9, **dadurch gekennzeichnet, dass** die eingesetzten stickstoffhaltigen Kohlenwasserstoffe gasförmig in die Flamme eingebracht werden.

15. Verfahren nach Anspruch 14, **dadurch gekennzeichnet, dass** die gasförmigen stickstoffhaltigen Kohlenwasserstoffe mit zumindest einem Teil der Einsatzgasbestandteile, ausgewählt aus dem sauerstoffhaltigem Gas, Ammoniak, dem Stickoxide enthaltendem Gas, Wasser und den sich im wesentlichen inert verhaltenden Einsatzgasbestandteilen, vorgemischt und das erhaltene Gasgemisch in die Flammreaktionszone eingebracht wird.

16. Verfahren nach einem der Ansprüche 1 bis 15, **dadurch gekennzeichnet, dass** in den Reaktionszonen eine turbulente Strömung vorherrscht.

17. Verfahren nach einem der Ansprüche 1 bis 16, **dadurch gekennzeichnet, dass** das erhaltene Spaltgas mindestens die Bestandteile Cyanwasserstoff, Kohlenstoffoxide, Wasserstoff, Wasser, Ammoniak, Stickstoff und leichte Kohlenwasserstoffe enthält und die Auftrennung des erhaltenen Spaltgases die Schritt umfasst:

> (i) Abkühlung des Spaltgases auf eine Temperatur < 300 °C;
> (ii) Abtrennung von Ammoniak als Ammoniumsulfat oder Amoniumphosphat durch Gaswäsche, wobei ein an Ammoniak abgereichertes Spaltgas erhalten wird;
(iii) Abtrennung von Cyanwasserstoff als wässrige Cyanwasserstoff-Lösung, wobei ein an Cyanwasserstoff und Ammoniak abgereichertes Restspaltgas erhalten wird;
(iv) Gewinnung von Cyanwasserstoff aus der wässrigen Cyanwasserstoff-Lösung durch Destillation;
(v) gegebenenfalls teilweise Rückführung des Restspaltgases in die Flammreaktionszone.

**Claims**

1.  A process for preparing hydrogen cyanide by autothermal noncatalytic oxidation of one or more nitrogenous hydrocarbons or a nitrogenous hydrocarbon mixture in which the nitrogenous hydrocarbons, an oxygen-containing gas, if appropriate ammonia, if appropriate water, if appropriate a gas comprising nitrogen oxides and if appropriate other essentially inert feed gas constituents are introduced into a flame reaction zone, react in the flame reaction zone and a post-reaction zone at a temperature of from 1000 to 1800°C for a reaction time of 0.03 to 0.3 s to form a cleavage gas which comprises at least the constituents hydrogen cyanide, carbon oxides, hydrogen, water, ammonia, nitrogen, light hydrocarbons and if appropriate other cleavage gas constituents, the atomic C/N ratio in the reaction zones being from 1 to 7 and the atomic air ratio $\lambda_{ato}$ being <0.6, the cleavage gas being cooled and separated.

2.  The process according to claim 1, wherein ammonia is introduced into the flame reaction zone.

3.  The process according to claim 1 or 2, wherein the nitrogenous hydrocarbons used have a C/N ratio of from 1 to 5.

4.  The process according to claim 1 or 2, wherein the nitrogenous hydrocarbons used have a C/N ratio of from 5 to 7.

5.  The process according to one of claims 1 to 4, wherein the nitrogenous hydrocarbons used are residues.

6.  The process according to one of claims 1 to 5, wherein water is introduced into the flame reaction zone.

7.  The process according to one of claims 1 to 6, wherein essentially inert-behaving further feed gas constituents are introduced into the flame.

**8.** The process according to claim 7, wherein the essentially inert-behaving further feed gas constituents comprise carbon oxides and/or hydrogen obtained from the cleavage gas.

**9.** The process according to one of claims 1 to 8, wherein a nitrogen oxide-containing gas is introduced into the flame reaction zone.

**10.** The process according to one of claims 1 to 9, wherein the nitrogenous hydrocarbons or hydrocarbon mixtures used are introduced in liquid form into the flame reaction zone.

**11.** The process according to claim 10, wherein the nitrogenous hydrocarbons used are atomized to form liquid droplets having a mean particle diameter of <100 $\mu$m.

**12.** The process according to claim 10 or 11, wherein the nitrogenous hydrocarbons or hydrocarbon mixtures used are introduced as aqueous emulsion into the flame reaction zone.

**13.** The process according to claim 12, wherein the aqueous emulsion used is atomized to form liquid droplets having a particle diameter of <100 $\mu$m.

**14.** The process according to one of claims 1 to 9, wherein the nitrogenous hydrocarbons used are introduced in the gaseous state into the flame.

**15.** The process according to claim 14, wherein the gaseous nitrogenous hydrocarbons are premixed with at least a part of the feed gas constituents selected from the oxygen-comprising gas, ammonia, the nitrogen oxide-containing gas, water and the essentially inert-behaving feed gas constituents, and the resultant gas mixture is introduced into the flame reaction zone.

**16.** The process according to one of claims 1 to 15, wherein turbulent flow prevails in the reaction zones.

**17.** The process according to one of claims 1 to 16, wherein the resultant cleavage gas comprises at least the constituents hydrogen cyanide, carbon oxides, hydrogen, water, ammonia, nitrogen and light hydrocarbons and the separation of the resultant cleavage gas comprises the steps:

(i) cooling the cleavage gas to a temperature <300°C;
(ii) removing ammonia as ammonium sulfate or ammonium phosphate by gas scrubbing, with an ammonia-depleted cleavage gas being obtained;

(iii) removing hydrogen cyanide as aqueous hydrogen cyanide solution, a hydrogen cyanide-depleted and ammonia-depleted residual cleavage gas being obtained;
(iv) recovering hydrogen cyanide from the aqueous hydrogen cyanide solution by distillation;
(v) if appropriate, partially recirculating the residual cleavage gas to the flame reaction zone.

**Revendications**

**1.** Procédé de préparation de cyanure d'hydrogène par oxydation autothermique, non catalytique, d'un ou de plusieurs hydrocarbures azotés ou d'un mélange d'hydrocarbures azotés, dans lequel les hydrocarbures azotés, un gaz oxygéné, éventuellement de l'ammoniac, éventuellement de l'eau, éventuellement un gaz contenant des oxydes d'azote et éventuellement d'autres composants gazeux chargés qui se comportent essentiellement de manière inerte sont introduits dans une zone réactionnelle à flamme, et réagissent dans la zone réactionnelle à flamme et dans une zone postréactionnelle à une température de 1000 à 1800°C pendant une durée de réaction de 0,03 à 0,3 s pour former un gaz de scission contenant au moins les composants cyanure d'hydrogène, oxydes de carbone, hydrogène, eau, ammoniac, azote, hydrocarbures légers et éventuellement d'autres composants de gaz de scission, le rapport atomique C/N dans les zones réactionnelles étant de 1 à 7 et l'indice d'air atomique $\lambda_{ato}$ étant < 0,6, et le gaz de scission étant refroidi et séparé.

**2.** Procédé suivant la revendication 1, **caractérisé en ce que** de l'ammoniac est introduit dans la zone réactionnelle à flamme.

**3.** Procédé suivant la revendication 1 ou 2, **caractérisé en ce que** les hydrocarbures azotés mis en oeuvre présentent un rapport C/N de 1 à 5.

**4.** Procédé suivant la revendication 1 ou 2, **caractérisé en ce que** les hydrocarbures azotés mis en oeuvre présentent un rapport C/N de 5 à 7.

**5.** Procédé suivant l'une des revendications 1 à 4, **caractérisé en ce que** les hydrocarbures azotés mis en oeuvre sont des résidus.

**6.** Procédé suivant l'une des revendications 1 à 5, **caractérisé en ce que** de l'eau est introduite dans la zone réactionnelle à flamme.

**7.** Procédé suivant l'une des revendications 1 à 6, **caractérisé en ce que** d'autres composants gazeux chargés, qui se comportent de manière essentiellement inerte, sont introduits dans la flamme.

8. Procédé suivant la revendication 7, **caractérisé en ce que** les autres composants gazeux chargés qui se comportent de manière essentiellement inerte comportent de l'hydrogène et/ou des oxydes de carbone obtenus à partir du gaz de scission.

9. Procédé suivant l'une des revendications 1 à 8, **caractérisé en ce qu'**un gaz contenant des oxydes d'azote est introduit dans la zone réactionnelle à flamme.

10. Procédé suivant l'une des revendications 1 à 9, **caractérisé en ce que** les hydrocarbures ou mélanges d'hydrocarbures azotés mis en oeuvre sont introduits dans la zone réactionnelle à flamme sous une forme liquide.

11. Procédé suivant la revendication 10, **caractérisé en ce que** les hydrocarbures azotés mis en oeuvre sont pulvérisés en gouttes de liquide ayant un diamètre moyen < 100 μm.

12. Procédé suivant la revendication 10 ou 11, **caractérisé en ce que** les hydrocarbures ou mélanges d'hydrocarbures azotés mis en oeuvre sont introduits dans la zone réactionnelle à flamme sous la forme d'une émulsion aqueuse.

13. Procédé suivant la revendication 12, **caractérisé en ce que** l'émulsion aqueuse mise en oeuvre est pulvérisée en gouttes de liquide ayant un diamètre de particules < 100 μm.

14. Procédé suivant l'une des revendications 1 à 9, **caractérisé en ce que** les hydrocarbures azotés mis en oeuvre sont introduits dans la flamme sous forme gazeuse.

15. Procédé suivant la revendication 14, **caractérisé en ce que** les hydrocarbures azotés gazeux sont prémélangés avec au moins une partie des composants gazeux chargés choisis parmi le gaz oxygéné, l'ammoniac, le gaz contenant des oxydes d'azote, l'eau et les composants gazeux chargés qui se comportent de manière essentiellement inerte, et le mélange gazeux obtenu est introduit dans la zone réactionnelle à flamme.

16. Procédé suivant l'une des revendications 1 à 15, **caractérisé en ce qu'**un écoulement turbulent prédomine dans les zones réactionnelles.

17. Procédé suivant l'une des revendications 1 à 16, **caractérisé en ce que** le gaz de scission obtenu contient au moins les composants cyanure d'hydrogène, oxydes de carbone, hydrogène, eau, ammoniac, azote et hydrocarbures légers et **en ce que** la séparation du gaz de scission obtenu comporte comme étapes :

(i) un refroidissement du gaz de scission à une température < 300°C,
(ii) un isolement d'ammoniac sous la forme de sulfate d'ammonium ou de phosphate d'ammonium par lavage de gaz, un gaz de scission appauvri en ammoniac étant obtenu,
(iii) un isolement de cyanure d'hydrogène sous la forme d'une solution aqueuse de cyanure d'hydrogène, un gaz de scission résiduaire appauvri en cyanure d'hydrogène et en ammoniac étant obtenu,
(iv) une production de cyanure d'hydrogène par distillation de la solution aqueuse de cyanure d'hydrogène,
(v) éventuellement un recyclage partiel du gaz de scission résiduaire dans la zone réactionnelle à flamme.

# FIG. 1

# FIG.2A

# FIG.2B

# FIG.3